(19) Europäisches Patentamt
European Patent Office
Office européen des brevets

(11) Veröffentlichungsnummer: **0 492 210 B1**

(12) **EUROPÄISCHE PATENTSCHRIFT**

(45) Veröffentlichungstag der Patentschrift: **21.09.94**

(51) Int. Cl.[5]: **C04B 41/62**, C09D 133/06

(21) Anmeldenummer: **91120931.0**

(22) Anmeldetag: **06.12.91**

# (54) Polymerbeschichteter Betonstein.

(30) Priorität: **22.12.90 DE 4041466**

(43) Veröffentlichungstag der Anmeldung:
**01.07.92 Patentblatt 92/27**

(45) Bekanntmachung des Hinweises auf die Patenterteilung:
**21.09.94 Patentblatt 94/38**

(84) Benannte Vertragsstaaten:
**AT BE CH DE ES FR GB IT LI NL SE**

(56) Entgegenhaltungen:
**EP-A- 0 355 028**
**EP-A- 0 383 002**
**FR-A- 1 595 742**

(73) Patentinhaber: **BASF Aktiengesellschaft**
**Carl-Bosch-Strasse 38**
**D-67063 Ludwigshafen (DE)**

(72) Erfinder: **Dotzauer, Bernhard, Dr.**
**Woehlerstrasse 12f**
**W-6701 Maxdorf (DE)**
Erfinder: **Wistuba, Eckehardt, Dr.**
**Im Obergarten 7**
**W-6702 Bad Duerkheim (DE)**
Erfinder: **Schwartz, Manfred, Dr.**
**Friesenstrasse 24**
**W-6700 Ludwigshafen (DE)**
Erfinder: **Petri, Rolf**
**Pierstrasse 10b**
**W-6710 Frankenthal (DE)**
Erfinder: **Bechert, Bertold**
**Trifelsstrasse 66**
**W-6718 Gruenstadt (DE)**
Erfinder: **Denu, Hans-Jürgen**
**Wormser Strasse 78**
**W-6840 Lampertheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft Betonstein, der mit einem Copolymer A mit einer Glastemperatur von -25 bis +30 °C aus

a) 0,1 bis 10 Gew.-% eines Monomeren der allgemeinen Formel I

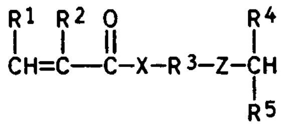

I ,

in der

| | |
|---|---|
| $R^1$ und $R^2$ | -H oder $C_1$-$C_4$-Alkyl, |
| $R^3$ | ein Brückenglied mit 1 bis 20 C-Atomen, |
| $R^4$ | $-C(O)R^6$, $-C(O)OR^6$ oder -CN |
| $R^5$ | -H, $-C(O)R^9$, $-C(O)OR^9$ oder -CN |
| X | -O- oder $-NR^7-$, |
| Z | eine einfache Bindung, $-CH_2-$, -O-, $-NR^8$-oder -O-C(O)- und |
| $R^6$,$R^7$,$R^8$,$R^9$ | -H, Alkyl, Aryl, Alkaryl oder Aralkyl mit bis zu 12 C-Atomen sind, |

b) 85 bis 99,9 Gew.-% wenigstens zweier Monomerer, ausgewählt aus der Gruppe aus Estern der Acryl- und Methacrylsäure von 1 bis 24 C-Atome enthaltenden Alkoholen, Vinylester von 1 bis 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden, nichtaromatischen Kohlenwasserstoffen mit 2 bis 8 C-Atomen und mindestens einer olefinischen Doppelbindung und

c) 0 bis 10 Gew.-% weiteren copolymerisierbaren zinnfreien Monomeren, beschichtet ist, mit der Maßgabe, daß die Beschichtung mit einer wäßrigen Zubereitung des Copolymers A hergestellt wurde.

Die Gew.-%-Angaben beziehen sich, wenn nicht anders angegeben, auf das Copolymer A.

Aus der FR-A-15 59 742 sind die gemäß vorliegender Anmeldung in der Form von wäßrigen Zubereitungen verwendeten Copolymere A als solche bekannt. Sie werden laut FR-A-15 59 742 durch Massepolymerisation gewonnen, bzw., sofern sie als Beschichtungsmittel verwendet werden, in Form ihrer nicht-wäßrigen Monomerenmischungen auf das zu beschichtende Substrat aufgetragen und unter Filmbildung unter den Bedingungen der umgebenden Atmosphäre auspolymerisiert. Als geeignete Substrate offenbart die FR-A-15 59 742 lediglich Metall, Holz, Glas, Porzellan oder Plastikmaterial.

Betonsteine insbesondere Betondachsteine stellt man aus Mörteln her, deren Konsistenz die endgültige Formgebung ermöglicht. Die Form der Dachsteine bleibt auch während des Härteprozesses, der meist bei Temperaturen zwischen 40 und 100 °C erfolgt, erhalten. Betondachsteine neigen zu Kalkausblühungen; diese entstehen durch Reaktion von Calciumhydroxid auf der Oberfläche der Dachsteine mit dem Kohlendioxid aus der Luft. Calciumhydroxid kann während der Aushärtung, aber auch im Wetter auf die Oberfläche der Dachsteine gelangen. Die Folge sind fleckige, unansehnliche Dächer. Die meist durchgefärbten Betondachsteine werden nach der Formgebung, aber vor der Härtung, also als sogenannte "grüne Steine", zumindest auf ihrer Oberseite mit Beschichtungsmassen abgedeckt, die die Kalkausblühungen auf der Oberfläche der Dachdeckungsstoffe verhindern sollen, und werden dann für 6 bis 12 Stunden in Härtekammern, in denen üblicherweise die oben genannten Temperaturen herrschen, gelagert; in dieser Zeit härten sie aus und zugleich trocknet die Beschichtungsmasse. Mitunter wird ein weiterer Auftrag mit Beschichtungsmasse nach der Aushärtung mit anschließender Trocknung vorgenommen.

Sehr breite Verwendung haben bei der Herstellung von Betondachsteinen wäßrige Beschichtungsmassen gefunden, die aus einer Bindemitteldispersion, anorganischen Zuschlagstoffen wie Kreide, Quarzmehl und Eisenoxidpigmenten, Additiven zur Einstellung der gewünschten Mindestfilmbildetemperatur (= MFT), z.B. schwerflüchtigen Estern und Kohlenwasserstoffen oder Weichmachern, sowie aus Pigmentverteilern und Entschäumern entstehen. Die Pigmentvolumenkonzentration (PVK) dieser Beschichtungsmassen liegt bei ca. 40 %.

Als Beschichtungen dienen Polymerdispersionen (vgl. dazu DE-A 21 64 256). Die mit den bisherigen Copolymerbeschichtungen erzielten Ergebnisse lassen jedoch noch zu wünschen übrig. Die Steine schmutzen darüber hinaus stark an.

Aus der deutschen Patentanmeldung P 40 03 909.9 und der DE-A 38 27 975 sind Verfahren zur Verhinderung von Ausblüherscheinungen auf mineralischen Substraten bekannt, bei denen Copolymerisate

mit einer Glasübergangstemperatur zwischen -25 und +30 °C verwendet werden. Das Verfahren erfordert jedoch den Zusatz besonderer Stoffe, nämlich aromatischer Ketone und als zusätzlichen Verfahrensschritt die Bestrahlung der Beschichtung mit ultraviolettem Licht.

In der DE-A 39 01 073 wird ein Betondachstein beschrieben, der mit einem Copolymerisat überzogen ist, der eine Organozinnverbindung einpolymerisiert enthält. Die Produkte sind mit speziellen Dicarbonsäuredihydraziden vernetzt. Im Laufe der Zeit zeigten sich jedoch Nachteile solcher Beschichtungen: Werden diese Betondachsteine der Witterung ausgesetzt, so verschmutzen sie. Im Gegensatz zu dunkel farbigen Beschichtungen, wie z.B. anthrazitfarbigen Oberflächen, stören diese Verschmutzungen auf hellen bzw. rötlichen Beschichtungen sehr, da der Schmutz auch durch längere und heftige Regengüsse nicht wieder entfernt wird.

Der vorliegenden Erfindung lag daher die Aufgabe zugrunde, beschichtete Betonsteine zu finden, die unter den Einsatzbedingungen in der Praxis unempfindlich gegen in der Natur vorkommende Schmutzpartikel, Stäube und Ruße sind und die Schutz gegen wetterbedingte Zerstörungen bieten.

Demgemäß wurden die eingangs definierten Betonsteine und ein Verfahren zur ihrer Herstellung gefunden.

Bevorzugte Ausführungsformen der Erfindung sind den Unteransprüchen zu entnehmen.

Das bevorzugt zinnfreie Copolymerisat A besteht zu 0,1 bis 10, bevorzugt 1 bis 6 Gew.-% aus mindestens einem Monomeren I. In der allgemeinen Formel I sind die folgenden Substituenten vorteilhaft:

| | |
|---|---|
| $R^1$: | H, |
| $R^2$: | H oder Methyl, |
| $R^3$: | ein aliphatisches oder aromatisches Brückenglied wie $-CH_2-$, $-C_2H_4-$, $-C_4H_8-$ und daneben auch $-C_3H_6-$ oder $-C_8H_{16}-$, |
| $R^4$: | $-C(O)R^6$ wie Acetyl oder Benzoyl oder -CN |
| $R^5$: | -H, $-C(O)R^9$ wie Benzoyl und Acetyl, |
| X | -O- oder -NH-, |
| Z: | -OC(O)- oder eine einfache Bindung, |
| $R^6$: | Methyl, Ethyl und Phenyl und |
| $R^7$ u. $R^8$ | -H und |
| $R^9$: | Methyl, Ethyl und Phenyl. |

Bevorzugt seien genannt Acetylacetoxyethylacrylat und -methacrylat

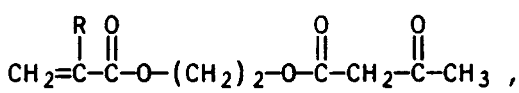

Acetylacetoxybutylacrylat und -methacrylat

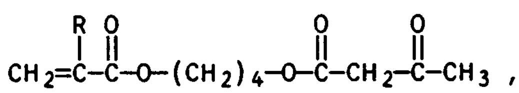

Cyanoacetoxyethylmethacrylat und Cyanoacetoxyethylacrylat

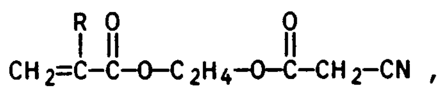

wobei R jeweils H oder $CH_3$ bedeutet.

Solche Verbindungen sind an sich bekannt aus DE-A 17 93 660, US-A 4 088 499 oder EP-A 241 127 und in üblicher Weiser herstellbar durch Umsetzung eines Hydroxyalkylesters, z.B. des Hydroxyethylesters oder Acryl- oder Methacrylsäure mit Diketen oder Cyanoacetylchlorid.

Gute Ergebnisse werden auch mit 1,1-Dibenzoyl-2-methacrylamidoethan, 1,1-Dibenzoyl-2-acrylamidoethan,

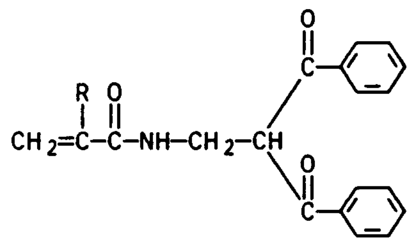

,

1-Benzoyl-1-acetyl-2-methacrylamidoethan und 1-Benzoyl-1-acetyl-2-acrylamidoethan

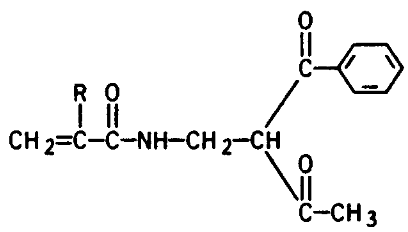

,

wobei R H oder $CH_3$ ist, erzielt.

Solche Verbindungen sind an sich bekannt aus DE-A 38 19 455 und in üblicher Weise herstellbar durch Amidomethylierung von 1,3-Diketonen in Gegenwart starker Säuren.

Die üblicherweise zinnfreien Monomeren b) sind in dem Copolymer zu 85 bis 99,9, bevorzugt 90 bis 98 Gew.-% enthalten.

Als Monomere b) kommen Ester der Acryl- oder Methacrylsäure von 1 bis 24 C-Atome enthaltenden Alkoholen. Bevorzugt sind solche Alkohole, die außer dem Sauerstoffatom in der OH-Gruppe keine weiteren Heteroatome enthalten, insbesondere Alkanole. Als solche Alkohole seien genannt Methanol, Ethanol, n- oder i-Propanol, n-, s- und t-Butanol, n-Pentanol, Isoamylalkohol, n-Hexanol, Cyclohexanol, Octanol, 2-Ethylhexanol, Lauryl- und Stearylalkohol, Benzylalkohol und Vinylethanol.

Als Ester der Acryl- und Methacrylsäure seien genannt Hexyl(meth)acrylat, Lauryl- oder Stearyl(meth)-acrylat, Cyclohexylacrylat, Phenylethylmethacrylat, Methylacrylat, Ethylacrylat und n- , s- und t-Butyl(meth)-acrylat s-Butyl(meth)acrylat, Benzylmethacrylat, Cyclohexylmethacrylat und vor allem Methylmethacrylat, Ethylmethacrylat, 2-Ethylhexylacrylat und n-Butylacrylat.

Weiterhin kommen in Frage Vinylester von Carbonsäuren mit 1 bis 20 C-Atomen wie Vinyllaurat, -stearat, Vinylpropionat und Vinylacetat.

Als vinylaromatische Verbindungen kommen Vinyltoluol, $\alpha$- und p-Styrol, $\alpha$-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens einer olefinischen Doppelbindung seien Butadien, Isopren und Chloropren genannt.

Gute Ergebnisse werden erzielt, wenn b) eine Mischung aus wenigstens zwei Monomeren ausgewählt aus Vinylaromaten und Acrylsäure- und Methacrylsäureestern von 1 bis 8 C-Atome enthaltenden Alkanolen ist, beispielsweise aus 50 bis 75 Gew.-% n-Butylmethacrylat, n-Butylacrylat und/oder 2-Ethylhexylacrylat und 25 bis 75 Gew.-% Styrol und/oder Methylmethacrylat, wobei die Gew.-% sich auf die Mischung b) beziehen.

Als weitere, d.h. von den Monomeren a) und b) verschiedene copolymerisierbare zinnfreie Monomere c) kommen Monomere, die außer C und H nur Heteroatome ausgewählt aus N, O, S, P, Si und Alkali enthalten können, in Betracht. Dazu gehören ungesättigte Carbonsäuren wie Acrylsäure, Methacryl-säure, Itaconsäure, Maleinsäure, Fumarsäure und Crotonsäure, Anhydride wie Maleinsäureanhydrid, Mono- und Diester von ungesättigten Dicarbonsäuren mit Alkanolen von 1 bis 8 C-Atomen, sowie Amide solcher Säuren wie Acrylamid, Methacrylamid sowie deren in $\alpha$-Stellung und/oder am Stickstoff mit $C_1$-$C_4$-Alkyl substituierte Derivate. Weiterhin kommen solche Ester und Amide der (Meth)acrylsäure in Frage, deren Ester- oder Amidgruppe einen $C_4$-$C_{14}$-Alkylrest enthält, der eine -C=O-Gruppe aufweist, wie Diacetonacrylamid. Die Amide können am Amidstickstoff auch mit Alkylaminogruppen mit 1 bis 4 C-Atomen in der Alkylgruppe, in denen der Aminstickstoff bis zu zwei $C_1$-$C_4$-Alkylreste tragen kann, substituiert sein. Auch deren quartäre

Derivate kommen in Frage. Beispiele sind N-(3-Dimethylamino)methacrylamid und N-(3-Trimethylammoniumpropyl)methacrylamidchlorid und das entsprechende Methylsulfat. Ebenso seien genannt olefinisch ungesättigte Sulfon- und Phosphonsäuren und deren Salze wie Vinylsulfonsäure. Bevorzugt werden Natriumvinylsulfonat und insbesondere Acrylsäure, Methacrylsäure, Acrylamid und Methacrylamid. Bevorzugte Copolymere A enthalten 1 bis 5 Gew.-% an Monomeren c).

Die Monomeren der unter b) genannten Gruppe liefern vom Gewicht her den weitaus größten Anteil an dem Copolymerisat A. Daher sind ihre Art und ihre Mengenverhältnisse überwiegend dafür verantwortlich, welche Glastemperatur ein Copolymerisat A hat. Die hier zu beachtenden Gesetzmäßigkeiten sind dem Fachmann bekannt. Sie seien daher hier nur in knapper Form skizziert: Man unterscheidet hartmachende und weichmachende Monomere. Die Ausdrücke "hartmachend" bzw. "weichmachend" bezeichnen solche Monomere, die in der Literatur gelegentlich ungenau als "hart" bzw. "weich" angegeben werden, d.h. solche Monomere, die für sich polymerisiert harte bzw. weichere Homopolymere ergeben. In diesem Sinne versteht man im allgemeinen unter hartmachenden Monomeren solche, deren Homopolymerisate Glastemperaturen von etwa 25 bis 120°C, unter weichmachenden Monomeren solche, deren Homopolymerisate Glastemperaturen von etwa -60 bis +25°C haben. Zwar gibt es bekanntermaßen fließende Übergänge zwischen diesen Monomerengruppen, doch sind für beide typische Vertreter bekannt.

Typische hartmachende Monomere sind z.B. Styrol, Methylmethacrylat und tert.-Butylacrylat. Typische weichmachende Monomere sind z.B. Acryl- und Methacrylsäureester von 2 bis 8 Kohlenstoffatome enthaltenden, nichttertiären Alkanolen.

Der Fachmann weiß, daß Copolymerisate, die weichmachende und hartmachende Monomere einpolymerisiert enthalten, Glastemperaturen haben, die zwischen denen der jeweiligen Homopolymerisate liegen. Er hat es daher in einfacher Weise in der Hand, durch Auswahl der Monomeren und ihrer Mengenverhältnisse vorgegebene Glastemperaturen einzustellen. Typische Kombinationen von Monomeren der unter b) genannten Art, deren Glastemperatur in dem erfindungsgemäß zu erreichenden Bereich liegen, sind z.B. (in Gew.-% bezogen auf die Mischung der genannten Monomeren):

- 65 % 2-Ethylhexylacrylat, 35 % Styrol,
- 55 % 2-Ethylhexylacrylat, 45 % Styrol
- 60 % 2-Ethylhexylacrylat, 20 % Methylmethacrylat, 20 % Styrol,
- 55 % 2-Ethylhexylacrylat, 35 % n-Butylmethacrylat, 10 % Styrol,
- 25 % n-Butylacrylat, 25 % 2-Ethylhexylacrylat, 50 % Styrol,
- 60 % n-Butylacrylat, 40 % Styrol,
- 30 % n-Butylacrylat, 30 % 2-Ethylhexylacrylat, 20 % Styrol, 20 % Methylmethacrylat,
- 35 % n-Butylacrylat, 30 % Methylmethacrylat, 35 % n-Butylmethacrylat.

Durch den zusätzlichen Einbau der unter a und c genannten Monomeren werden die Glastemperaturen der Copolymerisate A ebenfalls beeinflußt. Daher muß gegebenenfalls eine Anpassung der oben angegebenen Mengenverhältnisse der Monomeren b erfolgen.

Die Glastemperatur läßt sich nach üblichen Methoden, z.B. aus der Messung des E-Moduls im Kriechversuch als Funktion der Temperatur bestimmen (s. dazu A. Zosel, Farbe und Lack 82 (1976), 125-134).

Das Copolymer A wird vorzugsweise durch radikalische Emulsionspolymerisation in wäßriger Phase hergestellt.

Batchverfahren oder Zulaufverfahren, in denen der Initiator und/oder gegebenenfalls in Wasser emulgierte Monomere während der Polymerisation portionsweise oder kontinuierlich zugegeben werden, können benutzt werden (siehe beispielsweise Encyclopaedia of Polymer Science and Engineering, Vol. 6 (1986) 1 bis 52). Die entstehenden wäßrigen Copolymerdispersionen haben meist eine Konzentration an Copolymer, d.h. einen Feststoffgehalt von 40 bis 60 Gew.-%. Als Emulgiermittel werden meist 0,2 bis 3 Gew.-%, bezogen auf das Copolymer, anionische und/oder nichtinonische Emulgatoren, beispielsweise Natriumdialkylsulfolsuccinate, Natriumsalze von sulfatierten Ölen, Natriumsalze von Alkylsulfonsäuren, Natrium-, Kalium- und Ammoniumalkylsulfate, Alkalisalze von Sulfonsäuren, Fettsäuren, Fettalkohole, Fettamide und Alkylphenole, deren ethoxylierte und/oder sulfatierte Derivate, ferner Natriumsalze von Fettsäuren, wie Natriumstearat und Natriumoleat und sulfonierte Alkyldiphenylether verwendet.

Die erfindungsgemäßen Polymerdispersionen sind feinteilig, d.h. das Gewichtsmittel ihrer Teilchengröße liegt unter 150 nm (Bestimmung mit der analytischen Ultrazentrifuge: W. Maechtle, Makromolekulare Chemie 185 (1984) 1025 und folgende), wobei häufig ein ausgeprägter monomodaler Charakter sich

günstig auf die Sperreigenschaften der Beschichtungen auswirkt.

Die wäßrigen Dispersionen der Copolymere bilden bei Raumtemperatur üblicherweise glänzende, klare und zähflexible Filme, die nur wenig Wasser aufnehmen. Nach 24-stündiger Wasserlagerung beispielsweise werden weniger als 10, meist weniger als 5 Gew.-% gemessen. Sie sind im allgemeinen frei von Weichmachern und von Filmbildemitteln.

In bekannter Weise kann man mit Vorteil zur Herstellung von Beschichtungsnassen in die wäßrigen Dispersionen der Copolymere anorganischer Füllstoffe und Farbpigmente einarbeiten und gegebenenfalls die gewünschte Viskosität mit Wasser einstellen. Als anorganische Füllstoffe kommen z.B. in Betracht: Kreide, Quarzmehl und/oder Schwerspat. Beispiele für Farbpigmente sind Eisenoxid-Rot- bzw. -Schwarz-Pigmente. Die Mengen an Füllstoffen und/oder Pigmenten liegen im allgemeinen zwischen 50 und 450 Gew.-%, bezogen auf das Copolymer A.

Nachstehend sei der prinzipelle Aufbau einer solchen Beschichtungsmasse angegeben:

30 bis 50 Gew.-%, beispielsweise 40 Gew.-% Polymerdispersion,
20 bis 60 Gew.-% Füllstoffe, beispielsweise 20 Gew.-% Kreide und 15 Gew.-% Quarzmehl,
2 bis 10 Gew.-% Pigment, beispielsweise 5 Gew.-% Eisenoxidpigment und
10 bis 30 Gew.-%, beispielsweise 20 Gew.-% Wasser.

Bevorzugt wird ein pH-Wert von 6 bis 8 eingestellt, beispielsweise mit Ammoniak, Alkanolaminen wie Diethanolamin, Triethanolamin, Propanolamin und insbesondere $Ca(OH)_2$ und CaO.

Die Pigmentvolumenkonzentration der beispielhaft beschriebenen Formulierung liegt bei etwa 45 Gew.-% die Viskosität bei 150 mPa.s (82 $s^{-1}$), gemessen nach DIN 53 018.

Als Betonsteine kommen z.B. geformte Gebilde aus Beton und Gasbeton, z.B. Platten, Rohre und insbesondere Dachsteine in Frage. Sie werden zumindest auf einer ihrer Oberflächen beschichtet. Die Aufträge der Beschichtung können in vorteilhafter Weise auch auf nicht ausgehärtete Produkte dieser Art, sogenannte grüne Steine aufgebracht werden. Der Betonstein wird in üblicher Weise aus fertig gemischtem Beton durch ein Strangpreßverfahren hergestellt. Er erhält dabei bereits seine endgültige Form. Der Auftrag der Beschichtungsmasse erfolgt in an sich üblicher Weise durch Spritzen, Spachteln, Rakeln oder Gießen, wobei meist Auftragsmengen von 50 bis 500, insbesondere 100 bis 250 $g/m^2$, gemessen in gtrocknetem Zustand, angewandt werden. Das Trocknen des oder ggf. der Aufträge kann in sich üblicher Weise, ggf. bei Raumtemperatur oder wenig erhöhter Temperatur durchgeführt werden. Dazu wird im allgemeinen der beschichtete Stein in eine sogenannte Kammer eingebracht. Dort wird dem Beton in einem 6- bis 12 Stunden dauernden Abbindeprozeß bei Temperaturen von 40 bis 100 °C, in einigen Fällen 40 bis 65 °C, abgebunden und das Copolymerisat der Beschichtungsnasse im allgemeinen verfilmt.

Nach diesem Prozeß wird der Stein vorzugsweise ein zweites Mal mit der Beschichtungsmasse besprüht. Die Trocknung erfolgt in einem Tunnelofen bei um 100 °C liegenden Umlufttemperaturen. Tunnelofen und nachfolgende Abkühlstrecke sind so ausgelegt, daß üblicherweise eine vollständige Verfilmung der Beschichtung stattfindet.

Die sehr gleichmäßigen Beschichtungen besitzen eine sehr gute Sperrewirkung gegen Calciumionen, denn sie zeigen auch nach 10-tägiger Behandlung mit Wasserdampf (Beschichtungen einer 60 °C heißen Wasseroberfläche zugewandt) keine Kalkausblühungen. Die Beschichtungen sind Frost-Tau-Wechsel-stabil (Schnelltest in Anlehnung an DIN 52 104).

Die Steine sind damit gut geschützt gegen Kalkausblühungen. Weiterhin nehmen die Steine auch bei erhöhten Temperaturen kaum Schmutz an.

Die in den folgenden Beispielen genannten Teile und Prozente beziehen sich, wenn nicht anders angegeben, auf das Gewicht.

Beispiele

Gemäß der folgenden allgemeinen Vorschrift wurden die in der Tabelle aufgeführten Copolymerdispersionen der Beispiele 1 bis 5 und der Vergleichsversuche 1V, 2V und 5V hergestellt.

In an sich üblicher Weise wird nach dem Emulsionszulaufverfahren eine 50 %ige wäßrige Dispersion eines Copolymerisates aus der in der Tabelle angegebenen Monomermischung hergestellt, wobei 0,4 Gew.-% Natriumperoxodisulfat als Polymerisationsinitiator und 1,5 Gew.-% des Natrium-Salzes eines Schwefelsäurehalbesters eines iso-Nonylphenolethoxylates mit im Mittel 25 Ethylenoxid-Einheiten und 0,5 Gew.-% eines iso-Nonylphenolethoxylates mit im Mittel 25 Ethylenoxid-Einheiten, jeweils bezogen auf die Monomeren, eingesetzt werden. Die Polymerisation wird bei 85 °C durchgeführt.

Nach Abkühlen auf Raumtemperatur wird mit einer 25 %igen wäßrigen, anmoniakalischen Lösung ein pH-Wert von 7 eingestellt.

Der Verschmutzungstest für Polymerdispersionen wurde bewußt an unpigmentierten Filmen untersuchte, um praxisrelevante Unterschiede zu erfassen.

Die Polymerdispersion wurde als 200 µ starker Film auf eine gereinigte Glasplatte aufgezogen. Danach erfolgte eine Trocknung von einer Minute bei 70 °C. Der Film wurde danach ca. 24 h bei Raumtemperatur gelagert.

Verschmutzung, Stufe 1

Am oberen Ende des Filmes wurde ca. 1 g pulverförmige Aktivkohle mit einem Metallsieb (Teesieb) als runde Verschmutzung mit einem Durchmesser von ca. 5 cm aufgetragen. Nach einer Ruhezeit von 1 h wurde die Aktivkohle seitlich abgeklopft und kurz mit Wasser abgespült.

Verschmutzung, Stufe 2

Die Glasplatten wurden mit dem noch unverschmutzten Filmende 15 Minuten in destilliertes Wasser gestellt. Nach Ablauf dieser Zeit wird der Film bei Raumtemperatur getrocknet. Es erfolgte eine erneute Verschmutzung auf dem gewässerten Teil des Filmes wie oben beschrieben.

Beurteilung (visuell)

Note
- 1 = keine wahrnehmbare Anschmutzung
- 2 = schwache, ungleichmäßige Anschmutzung
- 3 = schwache, gleichmäßige Anschmutzung
- 4 = starke Anschmutzung, dunkle gleichmäßige Verschmutzungsfläche
- 5 = sehr stark, kein sichtbarer Unterschied zu unbehandeltem Auftrag (Ruß).

Tabelle: Copolymerdispersionen und Testergebnisse an Dispersionsfilmen

| Bsp. | Zusammensetzung [Gew.-Teile] | | Glastemperatur [°C] | Verschmutzung Note Stufe 1 / Note Stufe 2 |
|---|---|---|---|---|
| 1 | 55 | n-Butylacrylat | + 2 | 2 / 2,5 |
| | 43,5 | Styrol | | |
| | 1,5 | Acetylacetoxy-ethylmethacrylat | | |
| | 2,5 | Acrylsäure | | |
| 1V | 55 | n-Butylacrylat | + 1 | 4,5 / 5 |
| | 45 | Styrol | | |
| | 2,5 | Acrylsäure | | |
| 2 | 44 | n-Butylacrylat | | |
| | 15 | 2-Ethylhexylacrylat | - 5 | 3 / 3-4 |
| | 38 | Styrol | | |
| | 3 | Acetylacetoxy-ethylmethacrylat | | |
| | 2,5 | Acrylsäure | | |
| 2V | 46 | n-Butylacrylat | - 6 | 3-4 / 4-5 |
| | 15 | 2-Ethylhexylacrylat | | |
| | 39 | Styrol | | |
| | 2,5 | Acrylsäure | | |
| 3 | 65 | n-Butylacrylat | | |
| | 32 | Styrol | - 3 | 2,5 / 3 |
| | 3 | 1,1-Dibenzoyl-2-methacrylamidoethan | | |
| | 2,5 | Acrylsäure | | |
| 4 | 63 | n-Butylacrylat | | |
| | 33 | Styrol | - 2 | 2 / 2-3 |
| | 4 | 1-Benzoyl-1-acetyl-2-acrylamidoethan | | |
| | 2,5 | Acrylsäure | | |
| 5 | 62 | n-Butylacrylat | | |
| | 33 | Styrol | - 2 | 2 / 2 |
| | 5 | 2-Cyanoacetoxy-(2-methacryloyl)ester | | |
| | 2,5 | Acrylsäure | | |

Tabelle: (Forts.)

| Bsp. | Zusammensetzung [Gew.-Teile] | | Glastemperatur [°C] | Verschmutzung Note Stufe 1 / Note Stufe 2 |
|---|---|---|---|---|
| 5V* | 56 | 2-Ethylhexylacrylat | - 2 | 4,5/5 |
| | 41 | Styrol | | |
| | 2 | Tri-n-butylzinn-methacrylat | | |
| | 2,5 | Acrylsäure | | |

*) Abweichend von der allgemeinen Vorschrift werden nach Einstellen auf pH 7 0,5 Adipinsäuredihydrazid in die Dispersion eingerührt.

**Patentansprüche**

**Patentansprüche für folgende Vertragsstaaten : AT, BE, CH, DE, FR, GB, IT, LI, NL, SE**

**1.** Betonstein, der mit einem Copolymer A mit einer Glastemperatur von - 25 bis +30 °C aus

a) 0,1 bis 10 Gew.-% eines Monomeren der allgemeinen Formel I

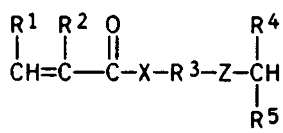

I ,

in der

| | |
|---|---|
| $R^1$ und $R^2$ | -H oder $C_1$-$C_4$-Alkyl, |
| $R^3$ | ein Brückenglied mit 1 bis 20 C-Atomen, |
| $R^4$ | $-C(O)R^6$, $-C(O)OR^6$ oder -CN |
| $R^5$ | -H, $-C(O)R^9$, $-C(O)OR^9$ oder -CN |
| X | -O- oder $-NR^7-$, |
| Z | eine einfache Bindung, $-CH_2-$, -O-, $-NR^8-$ oder -O-C(O)- und |
| $R^6$,$R^7$,$R^8$,$R^9$ | -H, Alkyl, Aryl, Alkaryl oder Aralkyl mit bis zu 12 C-Atomen sind, |

b) 85 bis 99,9 Gew.-% wenigstens zweier Monomerer, ausgewählt aus der Gruppe aus Estern der Acryl- und Methacrylsäure von 1 bis 24 C-Atome enthaltenden Alkoholen, Vinylester von 1 bis 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden, nichtaromatischen Kohlenwasserstoffen mit 2 bis 8 C-Atomen und mindestens einer olefinischen Doppelbindung und

c) 0 bis 10 Gew.-% weiteren copolymerisierbaren zinnfreien Monomeren,

beschichtet ist, mit der Maßgabe, daß die Beschichtung mit einer wäßrigen Zubereitung des Copolymers A heugestellt wurde.

**2.** Betondachstein nach Anspruch 1, wobei das Monomere a) wenigstens eine Verbindung, ausgewählt aus Acetylacetoxyethylmethacrylat, Acetylacetoxyethylacrylat,Acetylacetoxybutylacrylat, Acetylacetoxybutylmethacrylat, Cyanoacetoxyethylmethacrylat, Cyanoacetoxyethylacrylat, 1,1-Dibenzoyl-2-methacrylamidoethan, 1,1-Dibenzoyl-2-acrylamidoethan, 1-Benzoyl-1-acetyl-2-methacrylamidoethan, 1-Benzoyl-1-acetyl-2-acrylamidoethan, α-Benzoyl-β-methacrylamido-propionsäureethylester und α-Benzoyl-β-acrylamidopropionsäureethylester ist.

3. Betonstein nach den den Ansprüchen 1 oder 2, wobei b) ausgewählt ist aus Vinylaromaten und Acrylsäure- und Methacrylsäureestern von 1 bis 8 C-Atome enthaltenden Alkanolen.

4. Betonsein nach den Ansprüchen 1 bis 3, der mit einer Zubereitung beschichtet ist, die das Copolymer A und bis zu 450 Gew.-%, bezogen auf das Copolymer A, an mineralischen Zuschlagstoffen und/oder Farbpigmenten enthält.

5. Verfahren zur Herstellung eines Betonsteins gemäß einem der Ansprüche 1 bis 4, durch Aufbringen einer wäßrigen Zubereitung auf wenigstens eine Oberfläche des grünen Betonsteins und anschließendes Trocknen des Betonsteins, dadurch gekennzeichnet, daß die wäßrige Zubereitung ein Copolymer A aus
a) 0,1 bis 10 Gew.-% eines Monomeren der allgemeinen Formel I

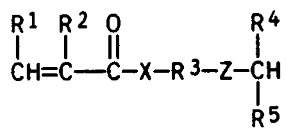

I ,

in der

| | |
|---|---|
| $R^1$ und $R^2$ | -H oder $C_1$-$C_4$-Alkyl, |
| $R^3$ | ein Brückenglied mit 1 bis 20 C-Atomen, |
| $R^4$ | $-C(O)R^6$, $-C(O)OR^6$ oder -CM |
| $R^5$ | -H, $-C(O)R^9$, $-C(O)OR^9$ oder -CN |
| X | -O- oder $-NR^7-$, |
| Z | eine einfache Bindung, $-CH_2-$, -O-, - $NR^8$- oder -O-C(O)- und |
| $R^6$,$R^7$,$R^8$,$R^9$ | -H, Alkyl, Aryl, Alkaryl oder Aralkyl mit bis zu 12 C-Atomen sind, |

b) 85 bis 99,9 Gew.-% wenigstens zweier Monomerer, ausgewählt aus der Gruppe aus Estern der Acryl- und Methacrylsäure von 1 bis 24 C-Atome enthaltenden Alkoholen, Vinylester von 1 bis 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden, nichtaromatischen Kohlenwasserstoffen mit 2 bis 8 C-Atomen und mindestens einer olefinischen Doppelbindung und
c) 0 bis 10 Gew.-% weiteren copolymerisierbaren zinnfreien Monomeren,
enthält.

6. Verfahren nach Anspruch 5, dadurch gekennzeichnet, daß man anschließend an die Härtung des Betonsteins eine weitere Schicht der wäßrigen Zubereitung aufbringt und trocknet.

7. Verfahren nach Anspruch 5 oder 6, dadurch gekennzeichnet, daß man die Zubereitung in einer solchen Menge auf den Betonstein aufbringt, daß der getrocknete Gesamtauftrag 50 bis 500 g pro $m^2$ beträgt und wobei der Betonstein in der Form eines Dachsteins ausgebildet ist.

**Patentansprüche für folgenden Vertragsstaat : ES**

1. Verfahren zur Herstellung eines Betonsteins durch Aufbringen einer wäßrigen Zubereitung auf wenigstens eine Oberfläche des grünen Betonsteins und anschließendes Trocknen durch Härten des Betonsteins, dadurch gekennzeichnet, daß die wäßrige Zubereitung ein Copolymer A aus
a) 0,1 bis 10 Gew.-% eines Monomeren der allgemeinen Formel I

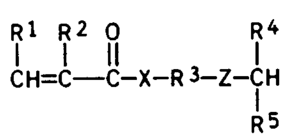

I ,

in der

| | |
|---|---|
| $R^1$ und $R^2$ | -H oder $C_1$-$C_4$-Alkyl, |

$R^3$ ein Brückenglied mit 1 bis 20 C-Atomen,
$R^4$ $-C(O)R^6$, $-C(O)OR^6$ oder -CN
$R^5$ -H, $-C(O)R^9$, $-C(O)OR^9$ oder -CN
X -O- oder $-NR^7-$,
Z eine einfache Bindung, $-CH_2-$, -O-, - $NR^8$- oder -O-C(O)- und
$R^6$,$R^7$,$R^8$,$R^9$ -H, Alkyl, Aryl, Alkaryl oder Aralkyl mit bis zu 12 C-Atomen sind,

b) 85 bis 99,9 Gew.-% wenigstens zweier Monomerer, ausgewählt aus der Gruppe aus Estern der Acryl- und Methacrylsäure von 1 bis 24 C-Atome enthaltenden Alkoholen, Vinylester von 1 bis 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden, nichtaromatischen Kohlenwasserstoffen mit 2 bis 8 C-Atomen und mindestens einer olefinischen Doppelbindung und

c) 0 bis 10 Gew.-% weiteren copolymerisierbaren zinnfreien Monomeren,

enthält.

**2.** Verfahren nach Anspruch 1, dadurch gekennzeichnet, daß das Monomere a) wenigstens eine Verbindung, ausgewählt aus Acetylacetoxyethylmethacrylat, Acetylacetoxyethylacrylat, Acetylacetoxybutylacrylat, Acetylacetoxybutylmethacrylat, Cyanoacetoxyethylmethacrylat, Cyanoacetoxyethylacrylat, 1,1-Dibenzoyl-2-methacrylamidoethan, 1,1-Dibenzoyl-2-acrylamidoethan, 1-Benzoyl-1-acetyl-2-methacrylamidoethan, 1-Benzoyl-1-acetyl-2-acrylamidoethan, $\alpha$-Benzoyl-$\beta$-methacrylamido-propionsäureethylester und $\alpha$-Benzoyl-$\beta$-acrylamidopropionsäureethylester ist.

**3.** Verfahren nach den Ansprüchen 1 oder 2, daß b) ausgewählt ist aus Vinylaromaten und Acrylsäure- und Methacrylsäureestern von 1 bis 8 C-Atome enthaltenden Alkanolen.

**4.** Verfahren nach den Ansprüchen 1 bis 3, dadurch gekennzeichnet, daß mit einer wäßrigen Zubereitung beschichtet wird, die das Copolymer A und bis zu 450 Gew.-%, bezogen auf das Copolymer A, mineralischen Zuschlagstoffen und/oder Farbpigmenten enthält.

**5.** Verfahren nach den Ansprüchen 1 bis 4, dadurch gekennzeichnet, daß man anschließend an die Härtung des Betonsteins, eine weitere Schicht der wäßrigen Zubereitung aufbringt und trocknet.

**6.** Verfahren nach den Ansprüchen 1 bis 5, dadurch gekennzeichnet, daß man die Zubereitung in einer solchen Menge auf den Betonstein aufbringt, daß der getrocknete Gesamtauftrag 50 bis 500 g pro $m^2$ beträgt, und wobei der Betonstein in der Form eines Dachsteins ausgebildet ist.

## Claims

**Claims for the following Contracting States : AT, BE, CH, DE, FR, GB, IT, LI, NL, SE**

**1.** Precast concrete which is coated with a copolymer A with a glass transition temperature of from -25 to +30 °C and composed of

a) from 0.1 to 10% by weight of a monomer of the formula I

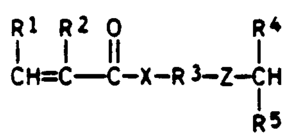

I

where $R^1$ and $R^2$ are each -H or $C_1$-$C_4$-alkyl,
$R^3$ is a bridge of from 1 to 20 carbons,
$R^4$ is $-C(O)R^6$, $-C(O)OR^6$ or -CN
$R^5$ is -H, $-C(O)R^9$, $-C(O)OR^9$ or -CN
X is -O- or $-NR^7-$,
Z is a single bond, $-CH_2-$, -O-, - $NR^8$-or -O-C(O)- and
$R^6$, $R^7$, $R^8$ and $R^9$ are each -H, alkyl, aryl, alkaryl or aralkyl of up to 12 carbons,

b) from 85 to 99.9% by weight of at least two monomers selected from the group comprising esters of acrylic and methacrylic acid with alcohols containing from 1 to 24 carbons, vinyl esters of

carboxylic acids containing from 1 to 20 carbons, vinylaromatic compounds containing up to 20 carbons, ethylenically unsaturated nitriles containing from 3 to 6 carbons, vinyl halides, non-aromatic hydrocarbons containing from 2 to 8 carbons and at least one olefinic double bond and
c) from 0 to 10% by weight of other copolymerizable tin-free monomers, with the proviso that the coating has been produced with an aqueous composition of copolymer A.

**2.** A concrete roofing tile as claimed in claim 1, where monomer a) is at least one compound selected from acetylacetoxyethyl methacrylate, acetylacetoxyethyl acrylate, acetylacetoxybutyl acrylate, acetylacetoxybutyl methacrylate, cyanoacetoxyethyl methacrylate, cyanoacetoxyethyl acrylate, 1,1-dibenzoyl-2-methacrylamidoethane, 1,1-dibenzoyl-2-acrylamidoethane, 1-benzoyl-1-acetyl-2-methacrylamidoethane, 1-benzoyl-1-acetyl-2-acrylamidoethane, ethyl $\alpha$-benzoyl-$\beta$-methacrylamidopropionate and ethyl $\alpha$-benzoyl-$\beta$-acrylamidopropionate.

**3.** Precast concrete as claimed in claim 1 or 2, where b) is selected from vinylaromatic compounds and acrylic and methacrylic esters with alkanols containing from 1 to 8 carbons.

**4.** Precast concrete as claimed in claims 1 to 3, which is coated with a composition which contains copolymer A and up to 450% by weight, based on copolymer A, of mineral aggregates and/or coloring pigments.

**5.** A process for producing precast concrete as claimed in any of claims 1 to 4 by applying an aqueous composition to at least one surface area of the green precast concrete and subsequently drying the precast concrete, wherein the aqueous composition contains a copolymer A composed of
a) from 0.1 to 10% by weight of a monomer of the formula I

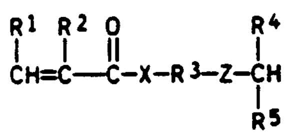

I

where $R^1$ and $R^2$ are each -H or $C_1$-$C_4$-alkyl,

| | |
|---|---|
| $R^3$ | is a bridge of from 1 to 20 carbons, |
| $R^4$ | is $-C(O)R^6$, $-C(O)OR^6$ or -CN |
| $R^5$ | is -H, $-C(O)R^9$, $-C(O)OR^9$ or -CN |
| X | is -O- or $-NR^7-$, |
| Z | is a single bond, $-CH_2-$, -O-, $-NR^8-$ or -O-C(O)- and |
| $R^6$, $R^7$, $R^8$ and $R^9$ | are each -H, alkyl, aryl, alkaryl or aralkyl of up to 12 carbons, |

b) from 85 to 99.9% by weight of at least two monomers selected from the group comprising esters of acrylic and methacrylic acid with alcohols containing from 1 to 24 carbons, vinyl esters of carboxylic acids containing from 1 to 20 carbons, vinylaromatic compounds containing up to 20 carbons, ethylenically unsaturated nitriles containing from 3 to 6 carbons, vinyl halides, non-aromatic hydrocarbons containing from 2 to 8 carbons and at least one olefinic double bond and
c) from 0 to 10% by weight of other copolymerizable tin-free monomers.

**6.** A process as claimed in claim 5, wherein the curing of the precast concrete is followed by application of another layer of the aqueous composition and drying.

**7.** A process as claimed in claim 5 or 6, wherein the composition is applied to the precast concrete in an amount such that the total application after drying is from 50 to 500 g per $m^2$, and where the precast concrete is in the form of a roofing tile.

**Claims for the following Contracting State : ES**

**1.** A process for producing precast concrete by applying an aqueous composition to at least one surface area of the green precast concrete and subsequently drying by curing the precast concrete, wherein the aqueous composition contains a copolymer A composed of

a) from 0.1 to 10% by weight of a monomer of the formula I

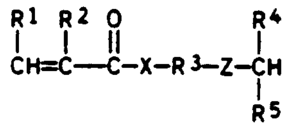

I

where $R^1$ and $R^2$ are each -H or $C_1$-$C_4$-alkyl,

| | |
|---|---|
| $R^3$ | is a bridge of from 1 to 20 carbons, |
| $R^4$ | is $-C(O)R^6$, $-C(O)OR^6$ or -CN |
| $R^5$ | is -H, $-C(O)R^9$, $-C(O)OR^9$ or -CN |
| X | is -O- or $-NR^7-$, |
| Z | is a single bond, $-CH_2-$, -O-, $-NR^8-$ or -O-C(O)- and |
| $R^6$, $R^7$, $R^8$ and $R^9$ | are each -H, alkyl, aryl, alkaryl or aralkyl of up to 12 carbons, |

b) from 85 to 99.9% by weight of at least two monomers selected from the group comprising esters of acrylic and methacrylic acid with alcohols containing from 1 to 24 carbons, vinyl esters of carboxylic acids containing from 1 to 20 carbons, vinylaromatic compounds containing up to 20 carbons, ethylenically unsaturated nitriles containing from 3 to 6 carbons, vinyl halides, non-aromatic hydrocarbons containing from 2 to 8 carbons and at least one olefinic double bond and

c) from 0 to 10% by weight of other copolymerizable tin-free monomers.

**2.** A process as claimed in claim 1, wherein monomer a) is at least one compound selected from acetylacetoxyethyl methacrylate, acetylacetoxyethyl acrylate, acetylacetoxybutyl acrylate, acetylacetoxybutyl methacrylate, cyanoacetoxyethyl methacrylate, cyanoacetoxyethyl acrylate, 1,1-dibenzoyl-2-methacrylamidoethane, 1,1-dibenzoyl-2-acrylamidoethane, 1-benzoyl-1-acetyl-2-methacrylamidoethane, 1-benzoyl-1-acetyl-2-acrylamidoethane, ethyl $\alpha$-benzoyl-$\beta$-methacrylamidopropionate and ethyl $\alpha$-benzoyl-$\beta$-acrylamidopropionate.

**3.** A process as claimed in claim 1 or 2, wherein b) is selected from vinylaromatic compounds and acrylic and methacrylic esters with alkanols containing from 1 to 8 carbons.

**4.** A process as claimed in claims 1 to 3, wherein coating is carried out with an aqueous composition which contains copolymer A and up to 450% by weight, based on copolymer A, of mineral aggregates and/or coloring pigments.

**5.** A process as claimed in claims 1 to 4, wherein the curing of the precast concrete is followed by application of another layer of the aqueous composition and drying.

**6.** A process as claimed in claims 1 to 5, wherein the composition is applied to the precast concrete in an amount such that the total application after drying is from 50 to 500 g per $m^2$, and where the precast concrete is in the form of a roofing tile.

## Revendications

**Revendications pour les Etats contractants suivants : AT, BE, CH, DE, FR, GB, IT, LI, NL, SE**

**1.** Brique de béton, revêtue d'un copolymère A possédant une température de transition vitreuse de -25 à +30 °C, constituée de

a) 0,1 à 10% en poids d'un monomère de la formule générale I :

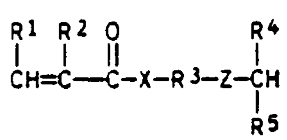

(I)

dans laquelle

$R^1$ et $R^2$ représentent chacun un atome d'hydrogène ou un radical alkyle en $C_1$-$C_4$,

$R^3$ représente un élément de pontage comptant de 1 à 20 atomes de carbone,

$R^4$ représente -C(O)$R^6$, -C(O)O$R^6$ ou -CN,

$R^5$ représente un atome d'hydrogène, -C(O)$R^9$, -C(O)O$R^9$ ou -CN,

X représente -O- ou -N$R^7$-,

Z représente une simple liaison, un radical -$CH_2$-, -O-, -N$R^8$- ou -O-C(O)-, et

$R^6$, $R^7$, $R^8$, $R^9$ représentent chacun un atome d'hydrogène, un radical alkyle, aryle, alkaryle ou aralkyle comprenant jusqu'à 12 atomes de carbone,

b) 85 à 99,9% en poids d'au moins deux monomères choisis dans le groupe formé par les esters de l'acide acrylique et de l'acide méthacrylique d'alcools contenant de 1 à 24 atomes de carbone, les esters vinyliques d'acides carboxyliques contenant de 1 à 20 atomes de carbone, les composés vinylaromatiques comportant jusqu'à 20 atomes de carbone, les nitriles éthyléniquement insaturés comportant de 3 à 6 atomes de carbone, les halogénures de vinyle, les hydrocarbures non aromatiques comportant de 2 à 8 atomes de carbone et au moins une double liaison oléfinique, et

c) 0 à 10% en poids d'autres monomères copolymérisables et dépourvus d'étain,

avec la condition que le revêtement fût réalisé avec une préparation aqueuse du copolymère A.

2. Tuile de couverture en béton suivant la revendication 1, caractérisée en ce que le monomère a) est au moins un composé choisi dans le groupe formé par le méthacrylate d'acétylacétoxyéthyle, l'acrylate d'acétylacétoxyéthyle, l'acrylate d'acétylacétoxybutyle, le méthacrylate d'acétylacétoxybutyle, le méthacrylate de cyanoacétoxyéthyle, l'acrylate de cyanoacétoxyéthyle, le 1,1-dibenzoyl-2-méthacrylamidoéthane, le 1,1-dibenzoyl-2-acrylamidoéthane, le 1-benzoyl-1-acétyl-2-méthacrylamidoéthane, le 1-benzoyl-1-acétyl-2-acrylaminoéthane, l'$\alpha$-benzoyl-$\beta$-méthacrylamido-propionate d'éthyle et l'$\alpha$-benzoyl-$\beta$-acrylamido-propionate d'éthyle.

3. Brique de béton suivant l'une quelconque des revendications 1 et 2, caractérisée en ce que b) est choisi parmi les composés vinylaromatiques et les esters de l'acide acrylique et de l'acide méthacrylique d'alcanols contenant de 1 à 8 atomes de carbone.

4. Brique de béton suivant l'une quelconque des revendications 1 à 3, revêtue d'une préparation qui contient le copolymère A et jusqu'à 450% en poids, par rapport au copolymère A, de pigments colorants et/ou de granulats minéraux.

5. Procédé de préparation d'une brique de béton suivant l'une quelconque des revendications 1 à 4, par l'application d'une préparation aqueuse sur au moins une surface de la brique de béton verte ou à l'état vert et séchage subséquent de la brique de béton, caractérisé en ce que la préparation aqueuse contient un copolymère A constitué de

a) 0,1 à 10% en poids d'un monomère de la formule générale I :

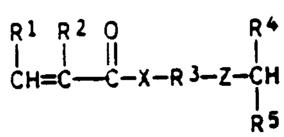

(I)

dans laquelle

$R^1$ et $R^2$ représentent chacun un atome d'hydrogène ou un radical alkyle en $C_1$-$C_4$,

$R^3$ représente un élément de pontage comptant de 1 à 20 atomes de carbone,

$R^4$ représente -C(O)$R^6$, -C(O)O$R^6$ ou -CN,

$R^5$ représente un atome d'hydrogène, -C(O)$R^9$, -C(O)O$R^9$ ou -CN,

X représente -O- ou -N$R^7$-,

Z représente une simple liaison, un radical -$CH_2$-, -O-, -N$R^8$- ou -O-C(O)-, et

$R^6$, $R^7$, $R^8$, $R^9$ représentent chacun un atome d'hydrogène, un radical alkyle, aryle, alkaryle ou aralkyle comprenant jusqu'à 12 atomes de carbone,

b) 85 à 99,9% en poids d'au moins deux monomères choisis dans le groupe formé par les esters de l'acide acrylique et de l'acide méthacrylique d'alcools contenant de 1 à 24 atomes de carbone, les

esters vinyliques d'acides carboxyliques contenant de 1 à 20 atomes de carbone, les composés vinylaromatiques comportant jusqu'à 20 atomes de carbone, les nitriles éthyléniquement insaturés comportant de 3 à 6 atomes de carbone, les halogénures de vinyle, les hydrocarbures non aromatiques comportant de 2 à 8 atomes de carbone et au moins une double liaison oléfinique, et
c) 0 à 10% en poids d'autres monomères copolymérisables et dépourvus d'étain.

**6.** Procédé suivant la revendication 5, caractérisé en ce qu'après le durcissement de la brique de béton, on applique une couche supplémentaire de la préparation aqueuse et on l'a sèche.

**7.** Procédé suivant l'une quelconque des revendications 5 et 6, caractérisé en ce que l'on applique la préparation sur la brique de béton en une proportion telle que la couche totale séchée varie de 50 à 500 g par $m^2$ et en ce que la brique de béton est conformée en forme de tuile de couverture.

**Revendications pour l'Etat contractant suivant : ES**

**1.** Procédé de fabrication d'une brique de béton, par l'application d'une préparation aqueuse sur au moins une surface de la brique de béton verte ou à l'état vert et séchage subséquent de la brique de béton, caractérisé en ce que la préparation aqueuse contient un copolymère A constitué de
a) 0,1 à 10% en poids d'un monomère de la formule générale I :

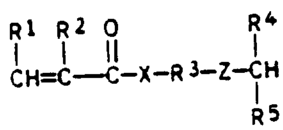

(I)

dans laquelle
$R^1$ et $R^2$ représentent chacun un atome d'hydrogène ou un radical alkyle en $C_1$-$C_4$,
$R^3$ représente un élément de pontage comptant de 1 à 20 atomes de carbone,
$R^4$ représente -C(O)$R^6$, -C(O)O$R^6$ ou -CN,
$R^5$ représente un atome d'hydrogène, -C(O)$R^9$, -C(O)O$R^9$ ou -CN,
X représente -O- ou -N$R^7$-,
Z représente une simple liaison, un radical -$CH_2$-, -O-, -N$R^8$- ou -O-C(O)-, et
$R^6$, $R^7$, $R^8$, $R^9$ représentent chacun un atome d'hydrogène, un radical alkyle, aryle, alkaryle ou aralkyle comprenant jusqu'à 12 atomes de carbone,
b) 85 à 99,9% en poids d'au moins deux monomères choisis dans le groupe formé par les esters de l'acide acrylique et de l'acide méthacrylique d'alcools contenant de 1 à 24 atomes de carbone, les esters vinyliques d'acides carboxyliques contenant de 1 à 20 atomes de carbone, les composés vinylaromatiques comportant jusqu'à 20 atomes de carbone, les nitriles éthyléniquement insaturés comportant de 3 à 6 atomes de carbone, les halogénures de vinyle, les hydrocarbures non aromatiques comportant de 2 à 8 atomes de carbone et au moins une double liaison oléfinique, et
c) 0 à 10% en poids d'autres monomères copolymérisables et dépourvus d'étain.

**2.** Procédé suivant la revendication 1, caractérisé en ce que le monomère a) est au moins un composé choisi dans le groupe formé par le méthacrylate d'acétylacétoxyéthyle, l'acrylate d'acétylacétoxyéthyle, l'acrylate d'acétylacétoxybutyle, le méthacrylate d'acétylacétoxybutyle, le méthacrylate de cyanoacétoxyéthyle, l'acrylate de cyanoacétoxyéthyle, le 1,1-dibenzoyl-2-méthacrylamidoéthane, le 1,1-dibenzoyl-2-acrylamidoéthane, le 1-benzoyl-1-acétyl-2-méthacrylamidoéthane, le 1-benzoyl-1-acétyl-2-acrylaminoéthane, l'$\alpha$-benzoyl-$\beta$-méthacrylamido-propionate d'éthyle et l'$\alpha$-benzoyl-$\beta$-acrylamido-propionate d'éthyle.

**3.** Procédé suivant l'une quelconque des revendications 1 et 2, caractérisé en ce que b) est choisi parmi les composés vinylaromatiques et les esters de l'acide acrylique et de l'acide méthacrylique d'alcanols contenant de 1 à 8 atomes de carbone.

**4.** Procédé suivant l'une quelconque des revendications 1 à 3, caractérisé en ce que l'on procède au revêtement avec une préparation qui contient le copolymère A et jusqu'à 450% en poids, par rapport

au copolymère A, de pigments colorants et/ou de granulats minéraux.

5. Procédé suivant l'une quelconque des revendications 1 à 4, caractérisé en ce qu'après le durcissement de la brique de béton, on applique une couche supplémentaire de la préparation aqueuse et on l'a sèche.

6. Procédé suivant l'une quelconque des revendications 1 à 5, caractérisé en ce que l'on applique la préparation sur la brique de béton en une proportion telle que la couche totale séchée varie de 50 à 500 g par $m^2$ et en ce que la brique de béton est conformée en forme de tuile de couverture.